# EUROPEAN PATENT SPECIFICATION

(11) **EP 1 863 713 B1**
(45) Date of publication and mention of the grant of the patent: **23.06.2010**
(21) Application number: 06716647.0
(22) Date of filing: 10.03.2006
(51) Int. Cl.: B65D 1/44, B29C 45/56, B29C 45/33

(54) **PLASTIC PRODUCT WITH STIFFENING PROVISIONS, AND METHOD FOR MANUFACTURING SAME**
KUNSTSTOFFPRODUKT MIT VERSTEIFUNGSVORKEHRUNGEN UND VERFAHREN ZU DESSEN HERSTELLUNG
PRODUIT EN PLASTIQUE AVEC APPORT DE RAIDISSEMENT ET PROCEDE POUR LE FABRIQUER

(30) Priority: 10.03.2005 NL 1028510
(43) Date of publication of application: 12.12.2007
(73) Proprietor: ECIM Technologies B.V., 2909 LC Capelle aan den IJssel (NL)
(72) Inventor: HOOGLAND, Hendricus Antonius, NL-1531 SZ Wormer (NL)
(74) Representative: Hatzmann, Martin
(86) International application number: PCT/NL2006/000126
(87) International publication number: WO 2006/096057

(56) References cited:
- EP-A- 1 008 527
- DE-A1- 2 624 890
- DE-U- 7 502 524
- NL-C2- 1 021 838

## Description

This invention relates to a plastic product with stiffening provisions. The invention relates in particular to plastic products having walls, with stiffening provisions provided in the walls.

Plastic products, in particular manufactured by injection molding, should have a desired stiffness, for instance to allow the products to be stacked or to be filled and carried. To that end, wall thicknesses may be chosen to be relatively large, but this is undesirable in view of, for instance, material use, cycle times for the manufacture, and cost price.

It has previously been proposed to provide stiffening ribs on suitable parts of a product, so that the wall thickness can be chosen to be smaller and yet a suitable stiffness can be obtained. The thickness of the stiffening ribs, measured along the product part that is to be stiffened, is then chosen to be approximately equal to the wall thickness of the product part to be stiffened. In this way, problems of unequal shrinkage are largely avoided. Stiffening ribs are not always favorable.

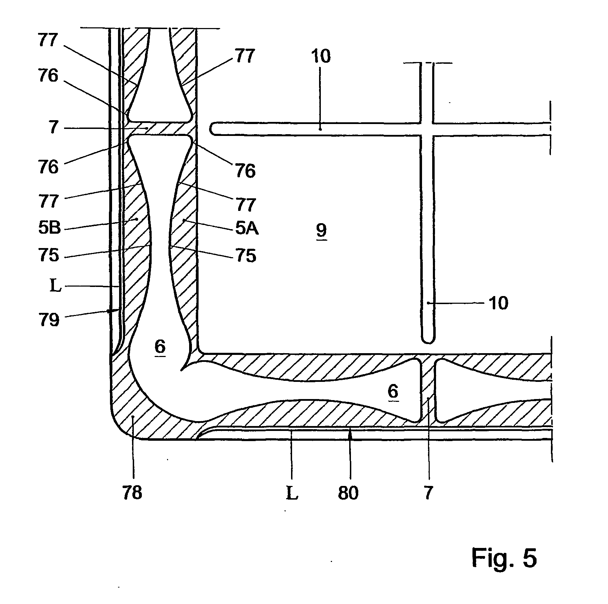

Document DE 7 502 524 discloses a crate for bottles which can have corner sections in the shape of double walled pillars, of which each individual wall section can have an undulating pattern. In fig. 5 an undulating pattern is shown of the sections, in which the thickness varies.

The object of the invention is to provide plastic products where stiffening provisions are obtained in an alternative manner. In addition, or alternatively, the object of the invention is to provide products with a pleasant appearance.

According to the invention a product is provided with at least one wall having a height direction and a width direction, which wall on at least one side has a wavy course over at least a portion in the height direction and a portion in the longitudinal direction, such that the thickness of the wall in at least one direction, preferably the longitudinal direction, is alternately greater and smaller with a flowing courses, wherein the product has at least two sidewalls and two end walls which extend along the side of substantially the rectangular bottom, preferably approximately at right angles to the bottom, while at least two of the walls have at least a middle portion having a cross section of said flowing course.

In an advantageous embodiment, a product is provided which is somewhat holder-shaped, with a bottom and at least one wall extending from that bottom, while said at least one wall in a direction approximately parallel to the bottom, over at least a portion of the wall, has a cross section which is such that the wall thickness in that direction has a flowing course between alternately a first, smaller thickness and a second, greater thickness.

In a further advantageous embodiment, a product is provided with at least one wall which on at least one side has a wavy course, such that the thickness of the wall in at least one direction is alternately thinner and thicker with a flowing course.

In a further advantageous embodiment, a product is provided which has at least one wall which on one side is substantially flat and on the opposite side has a wavy pattern in one direction, such that the thickness of the wall in said direction alternately increases and decreases.

In a further advantageous embodiment, a product is provided which has at least one wall which has a wall thickness of a sinusoidal course in one directions.

In a further advantageous embodiment, the product has at least one cross wall which extends from a wave crest or wave trough of said at least one wall. Wave crest should herein be understood to mean the apex of a wall part having a flowing course that extends over a maximum thickness, while wave trough should be understood to mean at least a wall part extending over a minimum thickness.

The invention furthermore provides a product having at least one wall which on one side has a substantially flat portion and on the opposite side, at least opposite said substantially flat portion, has a wavy pattern in one direction, such that the thickness of the respective wall part in said direction alternately increases and decreases, while on said substantially flat portion at least one label is provided. This label can have been provided through in-mold labeling, but can also have been provided in a different manner.

The invention furthermore relates to a method for manufacturing such plastic products, wherein at least one wall of the product is formed in a mold cavity by injection molding, wherein a portion of the mold cavity which forms said at least one wall has at least one movable mold wall part which is movable between a retracted position and a forwardly moved position, wherein, with the movable mold wall part in the retracted position, plastic is introduced into the respective part of the mold cavity and then said movable mold wall part is brought to the forwardly moved position, such that the plastic in said part of the mold cavity is spread, said movable mold wall part and/or an opposite mold wall part being formed such that on at least one side of the wall to be formed a wavy surface is obtained, such that the wall thickness of the respective wall in one direction has a flowing course between alternately thick and thin parts.

Waving of said at least one wall provides the advantage that sink marks can be wholly or largely prevented and that a high stiffness is obtained, in particular against buckling of the wall. Additionally, the advantage is achieved that a better force transmission can be obtained, especially upon stacking a series of such products. Especially middle areas of (side) walls of such products can contribute better to the (stacking) strength of the products, so that with relatively little material, great strength can be obtained.

The invention will be further elucidated with reference to the drawing. In the drawing:
Fig. 1 schematically shows in perspective view a product according to the invention, in the form of a small tub;
Fig. 2 shows in sectional top plan view along the line II-II in Fig. 1 a wall of a small tub with wavy surface;
Fig. 3 shows in sectional side elevation along the line III-III in Fig. 1 a wall of a small tub with wavy surface;
Fig. 4 schematically shows in top plan view a product according to the invention, in the form of bottle crate;
Fig. 4A shows a crate according to Fig. 4 viewed partly from below (lower half of Fig. 4A) and partly from above (upper half of Fig. 4A);
Fig. 4B shows a crate according to Fig. 4 in cross-sectional side elevation along the line IV-B - IV-B in Fig. 4;
Fig. 4C schematically shows a crate according to the invention in perspective view;
Fig. 5 shows in sectional elevational view along the line V -V in Fig. 4C a portion of a corner of a product with wavy surface and a label;
Figs. 6-8 shows different possible cross sections comparable to the cross section along the line IV-IV in Fig. 4;
Figs. 9A and B schematically show in partly sectional side elevation a mold for manufacturing a product according to the invention or for practicing a method according to the invention, in particular for a crate according to Fig. 4; and
Figs. 10A and B schematically show in partly sectional side elevation a mold for manufacturing a product according to the invention or for practicing a method according to the invention, in particular for a product according to Fig. 1.

In this description, the same or corresponding parts have the same or corresponding reference numerals. The exemplary embodiments shown are shown only by way of example and should not be construed to be limiting in any way. Many variations thereon are possible within the invention, including combinations of parts of the exemplary embodiments shown.

In this description, products are shown which have been manufactured by injection molding from plastic. Then, preferably use is made of a method and apparatus according to, for instance, WO2004/024416, W02004/041506, NL1027912, NL1027896 or NL1027910, in particular the use of movable wall parts of the mold for obtaining adiabatic heat development in the plastic after it has been introduced into the mold cavity, and the mold structure described therein, whereby in a simple manner products having relatively small and varying wall thicknesses can be obtained, with relatively short cycle times and little to no material stresses in the product. 'Relatively' should herein be understood to mean relative to a comparable product manufactured with conventional injection molding technique in a mold cavity of fixed shape and dimensions of the mold cavity, conforming to the product to be manufactured. However, also with conventional injection molding technique or injection compression molding and like techniques, a product according to the invention can be manufactured.

In this description, a wavy surface is understood to mean a surface having a substantially flowing course with crests and troughs, whereby if over at least two crests a straight line is drawn, the troughs are situated at a greater distance from said line than the crests. The waving of said surface preferably extends in one first direction. The crests and troughs then preferably extend over a length in a second direction which includes an angle with said first direction, over a length which is at least greater than the distance between two successive troughs in the first direction. The profile formed by the waved surface can be purely sinusoidal or cosinusoidal, with a uniform amplitude and wavelength. However, wavelength and/or amplitude in said first direction may vary.

Of a respective wall, preferably one side is substantially flat and the opposite side is wavy, but it is also possible to make both sides of wavy design, while the profile on opposite sides may be mirrored with respect to a central plane or may have different wave patterns. The waves then will not extend such that a wavy wall of a constant cross section is obtained. In products according to the invention, the or each wall having a wavy surface according to the invention may be provided with such a wave profile over the entire surface but also over just a portion. For instance, the first direction, and hence the wave pattern, can extend across the width of a wall, or a portion thereof, while the waves extend only over a portion of the height of the wall, in the second direction. In the second direction, for instance, above and under said waves, edges may then extend.

Where in this application reference is made to a wall, this is expressly understood to encompass a portion of a wall. A substantially flat side of a wall should herein be understood to mean a side of a wall or wall part that is formed by a flat surface or by a curved surface having a bending radius greater than the greatest wavelength of a wave profile on an opposite side of said surface.

In the drawings, different walls are represented with enlarged wall thicknesses, for clarity. The minimum and maximum thicknesses will have to be determined per product and can for instance be chosen between a few micrometers or less and whole millimeters or more, even up to tens of millimeters locally.

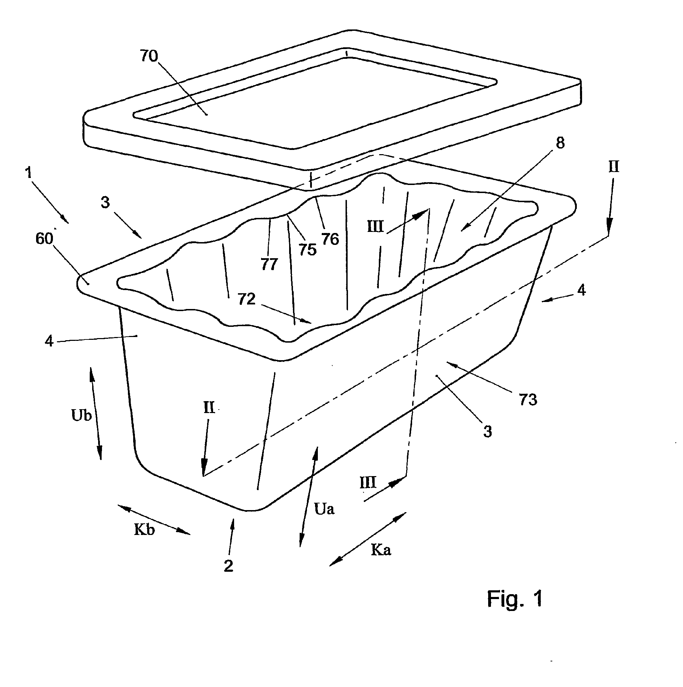

Fig. 1 shows a holder 1 in the form of a small tub, manufactured by injection molding or like mold-forming technique, from plastic. The holder 1 is for instance suitable as a butter tub and has a bottom 2, two end walls 4 and two sidewalls 3. The end walls 4 and sidewalls 3 jointly form a closed circumferential wall 5 which extends from a longitudinal edge of the bottom 2 with a slight outward inclination. On the side remote from the bottom, the circumferential wall 5 is provided with an outwardly extending flange 60 on which a cover can be secured for closing the holder 1. The cover 70 is represented only schematically in Fig. 1. A holder of this type is generally known.

In this description, where holders 1 are discussed and shown, the bottom 2 will be referred to as the lower side or bottom, while the opposite side, proximal to the longitudinal edge, will be referred to as upper side or top. The space 8 enclosed by the bottom 2 and circumferential wall 5 is designated as inner space; the side of the bottom 2, end walls 4 and sidewalls 3 that faces the space 8 is designated as inner side 72; the opposite side as outer side 73. Sidewalls 3 will also be referred to as longitudinal walls 3.

As appears from Fig. 1, each sidewall 4 has a first direction Ka, approximately parallel to the bottom 2, just as each end wall 4 has a first direction Kb, likewise approximately parallel to the bottom 2. At right angles to the first direction Ka, Kb, each sidewall 3 and end wall 4 has a second direction Ua and Ub, respectively, which is directed from the bottom 2 to the longitudinal edge 60 or in the opposite direction.

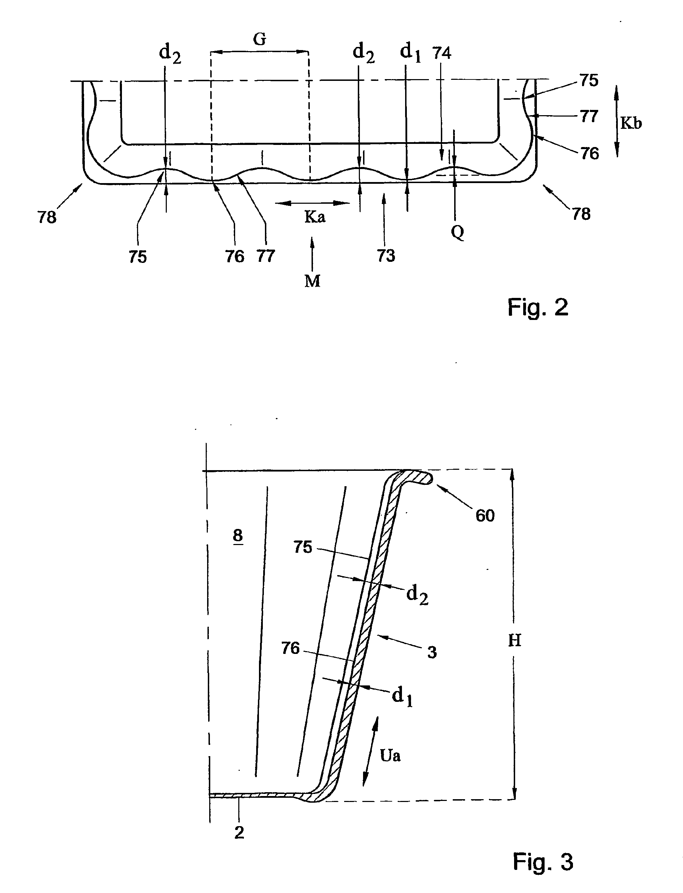

As is clearly apparent from Fig. 2, each sidewall 3 has an outer side 73 which is substantially flat and an inner side 72 which has a wavy surface 74 in the first direction. This surface 74 is substantially formed by a substantially sinusoidal surface of crests 75 and troughs 76 which alternate in the first direction K and extend in the second direction U over a distance which is greater than the smallest distance between two adjacent crests 75. The crests and troughs are mutually joined by flanks 77. The crests and troughs 75, 76 will also be designated as wave crests 75 and wave troughs 76. Since the outer side 73 is substantially flat and the inner side 72 is wavy with a flowing course, the wall thickness d of the respective wall has a sinusoidal course in the first direction, which should herein be understood to mean at least a course of alternate increase from a minimum thickness d1 at a wave trough 76 to a maximum thickness d2 at an adjacent wave crest 75 and subsequent decrease back to a minimum thickness d1 at an adjacent wave trough 76, etc. The course of the wave pattern can be completely regular, in the sense that it has a constant wavelength G and a fixed amplitude Q. This means that the wave pattern, viewed in cross section, meets the formula Y=N*Sin(X), wherein Y is the distance to a centerline through the waves and N is a constant factor for the amplitude Q and X is the position in the first direction K. However, the amplitude Q and/or the wavelength G may also vary over the length of the respective wall 3, 4, measured in the first direction K. For instance, it may be elected that the maximum thickness d2 near a middle M of the respective wall 3, 4 is greater than near one of the corner ribs 78 where the sidewall 3 and end wall 4 are mutually joined, or the obverse, depending on the desired strength of the wall in given positions. Depending on the expected loading on the holder 1, such patterns can be optimized using calculations, in particular a Finite Element Method (FEM).

As indicated, in the embodiment shown, both the end walls 4 and the sidewalls 3 have a wavy inner side. The wall thickness d can vary in the second direction U over the wave crests 75, wave troughs 76 and flanks 77, for instance by choosing the thickness D near the bottom 2 to be slightly greater than near the flange 60, with each cross section approximately parallel to the bottom 2 having approximately a profile as shown in Fig. 2. In this way, the force transmission can be adjusted. However, a thickness remaining equal in the second direction is preferred.

Fig. 3 shows a cross section through the sidewall in the second direction U, through a wave trough 76. Clearly, the crests 75, troughs 76 and flanks 77 extend over the entire height H of the sidewall. However, they may also extend over only a portion of the height, for instance only in a middle portion, while the waved profile can extend over the full length of the sidewall, viewed in the first direction K, but, here too, it can also extend only over a portion of that length, for instance only a middle area. For instance, the ribs 78 and the longitudinal edge of the bottom 2 can be made of slightly thicker design than the crests 75 and troughs 76 or can have an intermediate thickness. Slightly thicker ribs 78 can further enhance bearing capacity.

Use of the wavy pattern as shown and/or described provides the advantage that the bearing capacity of the respective wall 3, 4 in the second direction, that is, from top to bottom or the other way around is greater than in the case of a wall having a thickness for instance corresponding to the average between the minimum thickness d1 and the maximum thickness d2, so that with less material a holder can be manufactured that has a greater loadability than a comparable holder with walls having a wall thickness that is substantially constant in the first direction K. Especially the buckling strength of a wall according to the invention is high.

In a wall according to the invention, preferably the ratio between the minimum thickness d1 and the maximum thickness d2 is between 10:10.1 and 10:80, in particular between 10:10.5 and 10:60, more particularly between 10:11 and 10:50. Tests and calculations appear to indicate that with smaller products the ratio can be smaller than with larger products, at least with products that are to withstand higher loading.

Without wishing to be bound to any theory, it seems the enhanced strength of the holder 1 is the result of the formation of "columns" by the waves 75, 76, while the gradual course of the wall thickness d in the first direction, especially in the flanks 77, prevents so-called sink marks. Such sink marks on the outer side can in known products be the result of, for instance, stiffening ribs or cross walls on the inner side of the product.

In the holder 1 shown, preferably on the outer side of the circumferential wall, at least longitudinal wall 3 and/or end wall 4 and/or the bottom 2, a label L is provided, in particular by in-mold labeling. In this way, for instance product information can be provided, the appearance can be embellished and barrier properties can be improved or adjusted. The outer side being flat and having no sink marks or the like allows particularly good and simple labeling, with relatively thin labels L.

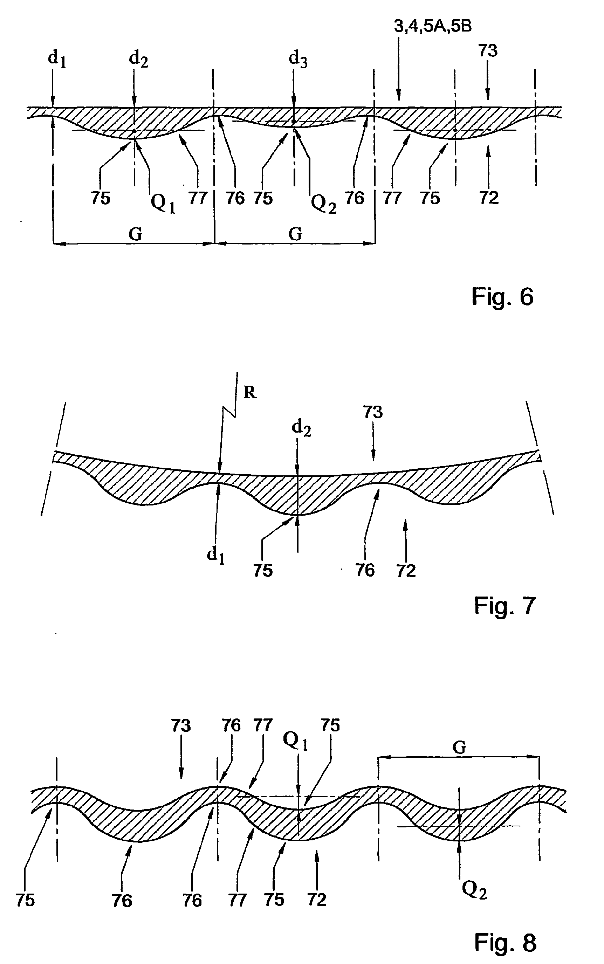

In Figs. 6-8, different cross-sectional forms of a wall 3, 4 according to the invention are shown, by way of illustration, comparable to the cross sections as shown in Figs. 2 and 5. Many further variants, for instance combinations of parts thereof, are possible.

Fig. 6 shows a cross section with a flat outer side 73 and a wavy inner side 72, the wavy pattern on the inner side having waves of equal wavelength G but alternately large and small amplitude Q.

Fig. 7 shows an embodiment in which the outer side 73 comprises a curved surface with a relatively large radius R, while the inner side 72 has a wavy surface of a regular wavelength G and amplitude Q. The radius R is many times greater than the wavelength G. The radius R here has been chosen such that the wall is slightly concave on the outer side 73. When being filled, the holder will be pressed slightly outwards, so that the firmness of the package can be improved. Of course, the outer side may conversely be slightly convex.

Fig. 8 shows an embodiment where the outer side 73 is wavy, as is the inner side 72. The waves on the outer side 73 and the inner side 72 have an equal wavelength, with crests 75 and troughs 76 next to each other, but have different amplitudes Q. This yields a wall of a thickness d varying with a flowing course, with comparable stiffening properties.

If a product according to the invention is designed with double walls, of course both wall parts of the double wall may be designed with a wavy inner surface 72 and/or outer surface 73, but possibly such a surface at one of the wall parts can suffice.

In the following part of the description, by way of example, a crate, in particular a crate for bottles, will be described. However, the invention should not in any way be construed as being limited thereto. Many other holders, which may or may not be compartmented, having bottom surfaces of a variety of different shapes, such as circular, rectangular, square, or any other shape, are possible within the framework of the invention. Also, holders can be formed with and without cavities in the sidewalls and/or bottom. Further, in the same or a comparable manner, also other products may be manufactured, for instance partly hollow, plate-shaped, rod-shaped, tubular or differently shaped products. The products can have a longitudinal wall or longitudinal walls extending at right angles to a bottom surface, but the or a longitudinal wall thereof can also be inclined relative to the bottom surface.

In a mold and method according to the invention, different plastics can be used, in particular thermoplastic plastics and blends. Also crystalline plastics and mixtures thereof can be used particularly well within the invention.

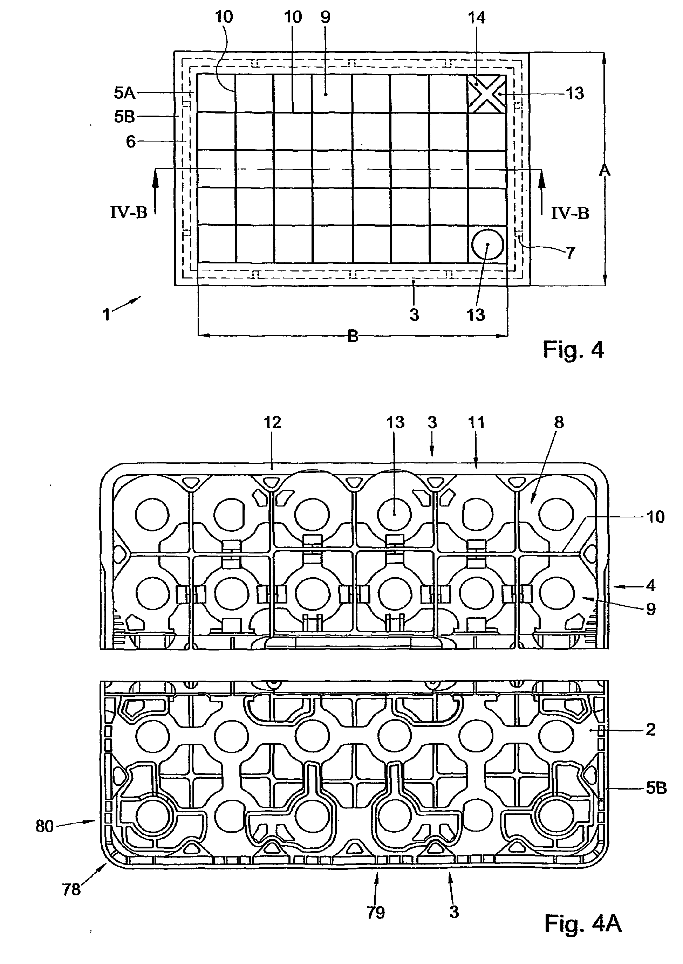

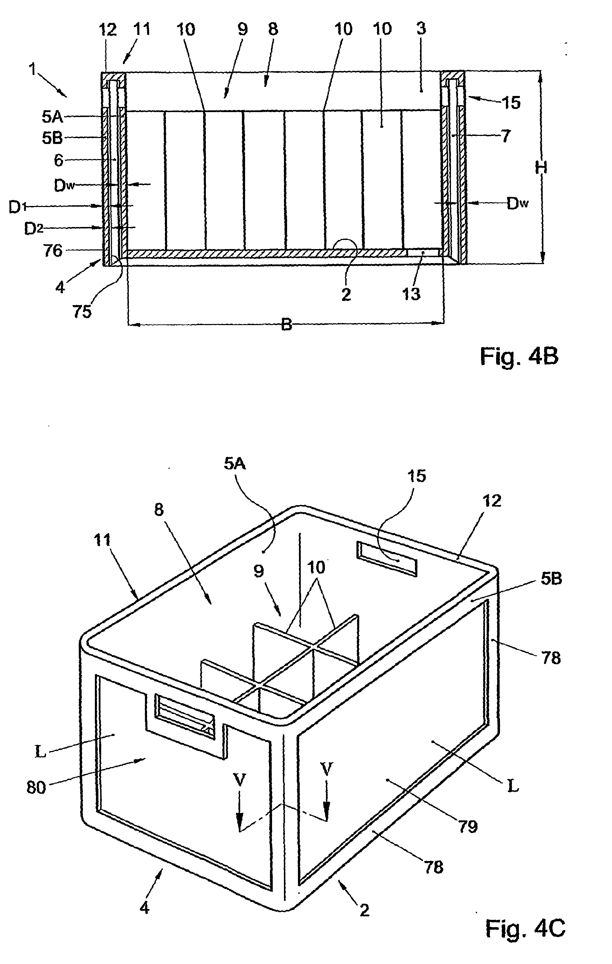

Figs. 4 and 4A (upper part) show, in top plan view, a holder 1 according to the invention, in the form of a bottle crate, to which the invention is not limited. Fig. 4B shows the holder 1 in cross-sectional side elevational view. Fig. 4A (lower part) and Fig. 5 show portions of the holder 1 from below. This holder 1 comprises a bottom surface 2 and a circumferential wall extending therefrom, with two longitudinal walls or sidewalls 3 and two end walls 4. The circumferential wall 5 is substantially double-walled, which means that it comprises a first wall 5A, a second wall 5B and, located therebetween, a cavity or open space 6. The average wall thickness Dw is relatively small with respect to the dimensions A, B of the bottom surface 2 and the height H. The wall thickness can be, for instance, between a few tenths of a millimeter and a few millimeters, depending on, for instance, the holder dimensions, intended use and the like. The specific profiling of the walls or parts thereof will be discussed hereinafter in more detail. Between the walls 5A, 5B, cross partitions 7 can be provided, preferably of a comparable wall thickness, for stiffening and enlarging the bearing capacity. Within the circumferential wall and the bottom surface 2, an inner space 8 with a compartmentation 9 is provided by cross walls 10. They reach to a point below the upper side 11 of the circumferential wall 5. The top ends of the walls 5A, 5B are interconnected by a carrier edge 12, preferably of a wall thickness in the order of magnitude of the walls 5A, 5B. In the bottom surface 2, openings 13 can be provided, for instance circular, as shown at the bottom right-hand side, or formed by cross bars 14, as shown at the top right-hand side in Fig. 4. By providing openings, material and weight, cooling time and/or closing pressure can be limited. In the end walls 4 handles 15 are provided at opposite sides.

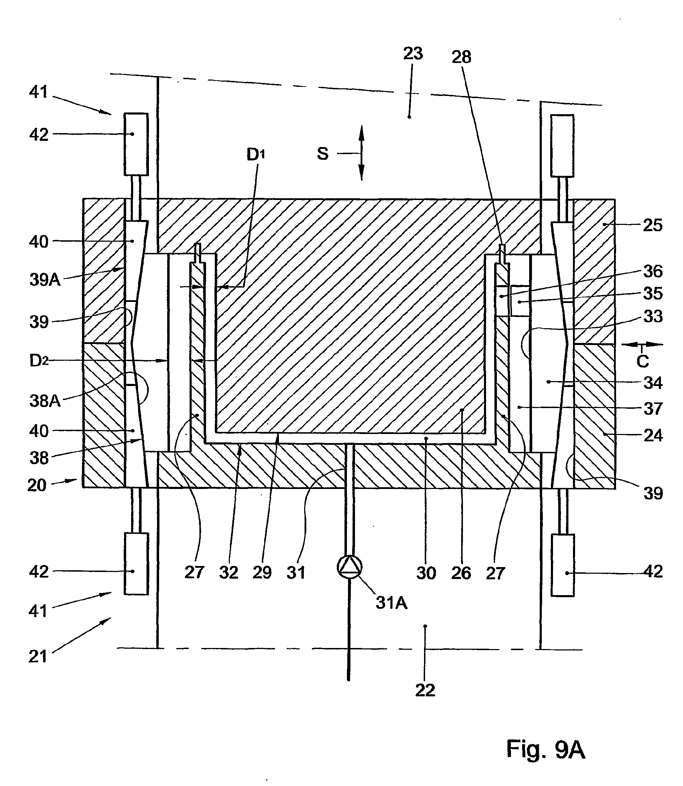

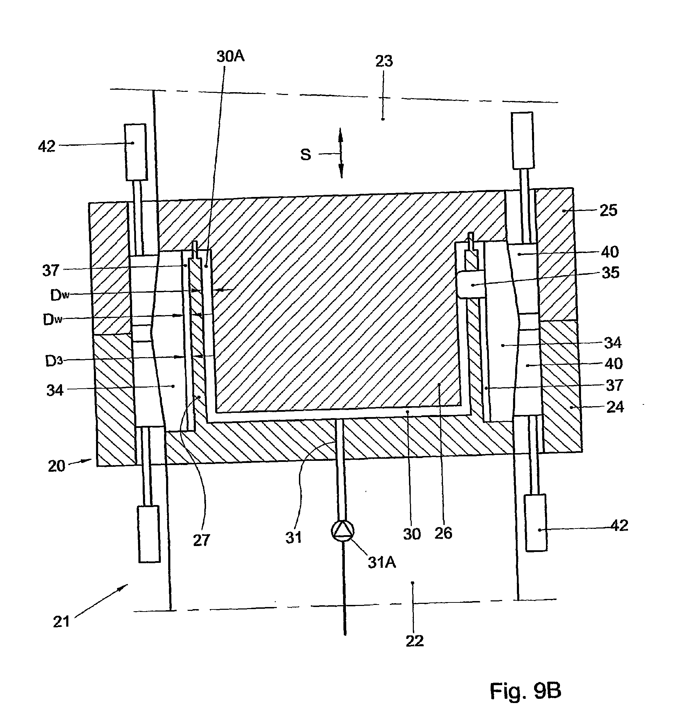

A holder 1 according to the invention can for instance be manufactured in a mold 20 according to Figs. 9A and B. This mold 20 is included in an injection molding apparatus, at least press 21, known per se, of which are shown parts of a fixed table 22 and a table 23, movable relative thereto in a first direction of movement S. The mold 20 comprises a first part 24, arranged on the fixed table, and a second part 25, movable relative thereto, mounted on the movable table 23. The first direction of movement S, of course, can have any orientation, for instance vertical as shown in Figs. 9A and 9B, but also horizontal, by tilting the press 21.

The second part 25 comprises a central core part 26, for forming the internal space 8 of the holder 1. This central core part 26 is surrounded on all sides by a second core part 27 provided on the first part 24 of the mold 20. The second core part 27 corresponds in shape to the shape of the cavity 6 in the circumferential wall of the holder 1. Optionally, pins 28 can be provided in the upper side of the second core part 27, that fit into recesses in the second part 25 of the mold 20 to support it. As a result, openings are formed in the edge 12. Between a leading end 29 of the central core part 26 and the first part 24, a space 30 is left open for forming the bottom surface 2. In this space 30 terminates a supply opening 31 through which plastic can be introduced into the mold cavity 32. However, that opening 31 can also be provided at a different position or in multiple positions.

On the side of the second core part 27 facing away from the central core part 26, in the embodiment shown, on four sides, a movable wall part 33 is provided in the form of a slide 34 which is movable in a second direction of movement C. The surface facing the second core part 27 has the form of the outside of the respective part of the wall 3 or 4. Optionally, on the slide 34, a projection 35 can be provided for forming the handle 15, which projection, to that end, can reach through an opening 36 in the second core part 27. For the sake of simplicity, projection 35 and opening 36 are only drawn on the right-hand side.

In the position shown in Fig. 9A, the slides 34 are shown in a retracted position, i.e. at a distance from the second core part 27 which is greater than the desired wall thickness of the second wall 5. Hence, between the slide 34 and the adjacent core part 27, a relatively great, wide space 37 is provided, through which plastic can flow readily and without much resistance.

On the rear side of the slide 34, inclining surfaces 38 are provided, in the embodiment shown two surfaces 38 inclining in opposite directions. Further, a flat running surface 39 is provided behind the slide, i.e. on the side thereof facing away from the second core part 27. Provided between the inclining surfaces 38 and the running surface 39 are wedges 40 with corresponding inclining surfaces 38A and running surfaces 39A. The wedges 40 are connected with drive means 41, in Figs. 9A and 9B designed as piston-cylinder assemblies 42, with which the wedges 40 can be moved from the first position shown in Fig. 9A to a second position shown in Fig. 9B, and vice versa. By moving the wedges 40 to the second position, the slides 34 are moved inwards, i.e. towards the second core part 27. Consequently, the space 37 is reduced and plastic present therein is thereby displaced and/or somewhat compressed.

A mold 20 with press 21 can be used as follows.

The mold 20 is brought into the closed position shown in Figs. 9A and 9B and held closed by the press 21 with a relatively light closing pressure. The closing pressure is smaller than is necessary for injection molding a similar holder with the aid of conventional injection molding technique and injection mold, which can be customarily determined from, chiefly, the projected surface in the direction S, the flow paths, in particular the wall thicknesses, and the plastic used.

The slides 34 are brought into the retracted, first position, after which, via the supply opening 31, with the aid of means 31A suitable therefor, plastic is introduced into the space 30, preferably in molten, at least substantially liquid form. From the space 30, the plastic flows via the spaces 30A between the central core part 26 and the second core part 27 over the second core part 27 into the spaces 37. Since the plastic experiences virtually no resistance in the spaces 37, it can easily flow into them without unwanted pressure build-up and/or solidification of the plastic. Then, when substantially all needed plastic has been introduced into the mold cavity 32, the drive means 41 are energized, so that the wedges 40 are moved to the second position and the slides 34 are forced in the direction of the second core part 27. The plastic is thereby forced further into the mold cavity 32, in particular as far as the end of the space 37, so as to fill it completely.

As the direction of movement C includes an angle with the direction of movement S, a favorable load of the different parts is obtained. As the plastic can flow into and through the mold cavity 32 without much resistance, relatively low pressures can suffice. As a result, for instance, bending of the second core parts 27 is prevented and excessive wear is controlled. Moreover, as a result of this too, the required closing force can be kept low.

After the slides have been moved forwards maximally, the plastic can solidify and after optional retraction of the slides and after opening of the mold 20, the holder 1 can be taken out. As a result of the relatively low injection pressure, the product will be virtually stressless.

In Figs. 9A and 9B, the openings for forming the partition walls 10 have been omitted for clarity.

The slides 34 of a mold 20 can be moved so rapidly that adiabatic heat development occurs in the plastic. As a result, the flow properties of the plastic can be improved still further and any plastic which has possibly solidified can be made liquid again. Alternatively, the slides 34 can also move slowly, so that the plastic is not heated, or heated only to a very limited extent, and already solidifies slightly during introduction. Also, it may be elected to move the slides in the direction of the second position already during introduction of the plastic (Fig. 9B), so that the plastic is held in motion continuously. This can be advantageous in particular in the case of, for instance, crystalline plastics and plastics having a glass transition point and/or a low melt or when product properties of the plastic are to be accurately preserved.

Fig: 4C schematically shows in perspective view the holder 1 according to Fig. 4. It clearly shows that this holder has ribs 78 which form a framework, while middle portions 79, 80 of the sidewalls 3 and end walls 4, respectively, are flat and are somewhat staggered with respect to the outer plane defined by the ribs 78. On these flat middle portions 79, 80, labels L have been provided, for instance by in-mold labeling. The sidewalls 3 and end walls 4, at least the inner walls 5A and/or the outer walls 5B thereof, have, at least adjacent said flat middle portions 79, 80, on the side facing the space 8, a surface 72 waved in the first direction K, comparable to that as shown in Fig. 2 or Figs. 6-8. In this way, these middle portions 79, 80 can be simply kept flat, have a relatively small average wall thickness and yet have a high loadability, especially in the second direction U.

In Fig. 5, schematically a portion of a corner part of a crate 1 according to Fig. 4 is shown, in sectional elevation along the line V-V in Fig. 4C. Clearly visible are the (inner) wall 5A and the (outer) wall 5B with the space 6 therebetween and the partitions or cross walls 7. In the embodiment shown, these are fixedly connected with the walls 5A, 5B and extend over approximately the entire height H. However, these can also extend over only a portion of the height and they can be wholly or partly separate from at least one of the walls 5A, 5B. Clearly, the ribs 78 are slightly thicker than the further walls 5, so that a frame is obtained with recessed middle portions 79, 80 on which said labels L are provided.

The mutually facing sides of the walls 5A, 5B each have a wavy surface with crests 75 and troughs 76 with flanks 77 therebetween, as described earlier. The crests 75 are placed opposite each other, and so are the troughs 76, while the amplitudes Q and wavelengths G have been chosen to be substantially equal. However, the waves can also be positioned differently with respect to each other and/or the wavelengths G and/or amplitudes Q can also be chosen differently or be varied in the first direction K. In the embodiment shown, the cross walls 7 are placed between two troughs 76 of opposite surfaces. In this way, stiffness is imparted to the troughs 76 there where the wall thickness is smallest, while between the cross walls 7 and/or a cross wall 7 and a rib 78 the wall thickness increases over the flanks 77 to the maximum thickness and hence higher stiffness of the respective wall part. In this way, with still less material, a desired stiffness can be obtained. However, the cross walls 7 can of course be placed differently, for instance between two opposite crests 75 or between a crest 75 and an opposite trough 76. Variations thereon will readily occur to those skilled in the art and are expressly included herein.

Visible in Fig. 5 are the partitions or cross walls 10 by which the compartmentation 9 has been provided. They extend from the bottom 2. In the embodiment shown, the partitions 10 extend in line with the cross walls 7. This may be of benefit to stiffness. However, the cross walls can also be positioned differently with respect to each other. FEM calculations can be employed in the usual manner for optimization of a product according to the invention.

In the embodiment shown, the cross walls 10 are not connected with the (inner) wall 5A. In this way, for instance unwanted stresses may be avoided. However, they may of course be connected with the wall 5A, over the entire height thereof or a portion thereof.

By the use of a mold 20 and method as described above or according to any one of the earlier-mentioned patent applications, the advantage is achieved that relatively few stresses, if any, occur in the material of the crate. As a result, a product according to the invention can be made of still lighter and stronger design. Moreover, in this way, non-clearing products, such as a crate according to Fig. 4, can be manufactured in a simple manner. A further advantage of this method is that as a result of the relatively low pressures and stresses that are introduced into the product, surprisingly, differences in wall thickness have substantially no influence on the cooling time, while, surprisingly, deformations during cooling substantially do not occur, nor even when the product is subsequently heated (locally).

In the crate 1 as shown in Fig. 4, the wave-form surface of the two walls 5A, 5B extends, both at the sidewalls 3 and the end walls 4, over the entire length B and length A, respectively, viewed in the first direction Ka, Kb. However, this can naturally also be provided over a part of the length A and/or B, in particular behind said middle portions 79, 80. It has been found that sink marks as a result of the cross walls 7, 10 in particular in the middle portions 79, 80 are prevented by the use of the wavy surface on the opposite side, while yet a small average thickness can suffice, which moreover is smaller than is usual.

Without wishing to be bound to any theory, in a crate according to the invention, advantages appear to be associated with the wavy surfaces in that a part of the bearing capacity of the crates, compared with traditional crates, has been moved to a middle portion of the walls. As a result, the ribs 78 can be made of slightly lighter design, while the middle portions do not require more material than in said traditional crates where the ribs have a much greater share in the bearing capacity. In particular when stacking the crates, this is particularly advantageous. Indeed, the crates can sustain a higher load while the crates themselves are lighter and hence will constitute a lesser load upon maximum stacking. Traditional crate is herein understood to mean at least a crate of equal dimensions with equal inner space, comprising a frame with relatively thick ribs with middle portions therein having a relatively constant thickness, smaller than the thickness of the ribs.

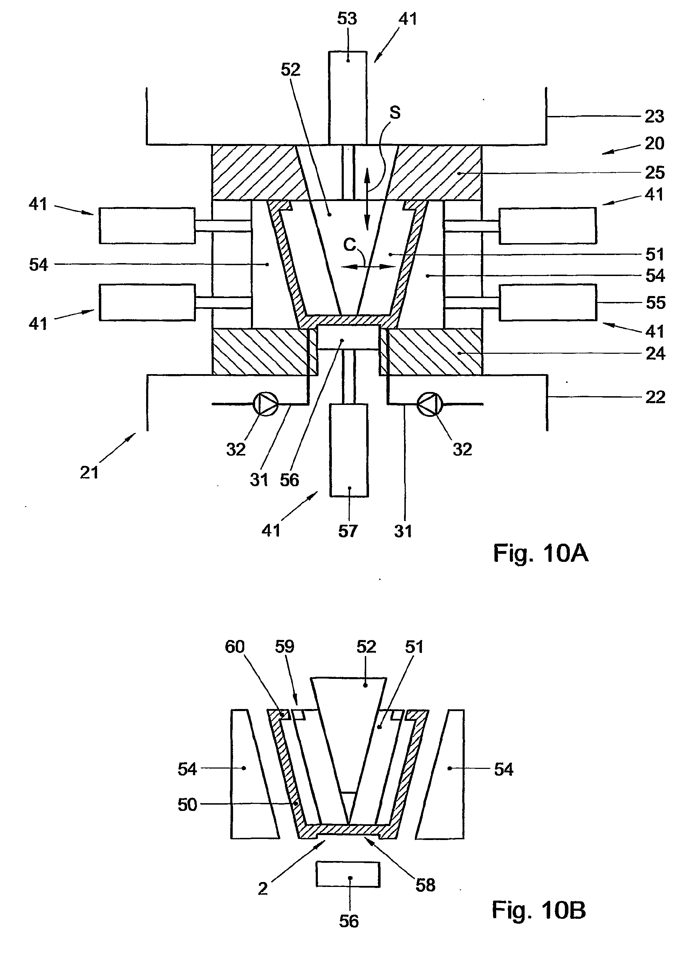

Fig. 10 schematically shows a mold 20 in an alternative embodiment. This mold 20 is suitable for forming a holder 50 of the type of holder 1 as shown in Fig 1. In this embodiment, the first core part 27 comprises two first slides 51, which are movable in a second direction of movement C. Between the first slides 51, a first wedge 52 is included which, with the aid of a drive means 41, for instance an electrically drivable screw spindle 53, is movable in the first direction S. Upon movement, being downward in Fig. 5, of the wedge 52, the first slides 51 are moved outwards, into a product-forming second position. On the outside of the mold 20, at least of the mold cavity 32, second slides 54 are provided, drivable by, for instance, drive means 41 in the form of piston-cylinder assemblies 55, between a retracted first position and a forwardly moved second position. Below the mold cavity 32, a third slide 56 is provided, movable in the first direction S with the aid of drive means 41, for instance in the form of, again, a piston-cylinder assembly 57.

In Fig. 10B, the different slides 51, 54 and 56 are shown in the retracted second position, in Fig. 10A in the forwardly moved first position, both around a holder 1. As is clearly apparent from the Figures, in the slides, in particular in the first slides 51, undercuts 59 may have been provided, for instance in an edge area thereof, so that projections, ridges, grooves or the like can be provided in the holder which otherwise would not be clearing. In the bottom surface 2 of the holder 1, a thinned portion 58 has been provided by pushing the third slide 56 further.

If cross walls 7, 10 are provided, these can extend at right angles to the wall 3, 4 but may also include an angle with it, preferably between 20° and 160°. The thickness of the cross wall is preferably smaller than or equal to the average thickness of the wall with which it is connected but may also be greater.

It will be clear that the invention is not limited in any way to the exemplary embodiments given in the drawing and the description. Many variations thereon are possible within the scope of the invention outlined by the claims.

For instance, in a mold according to the invention, different numbers and/or shapes of slides, at least moving wall parts, can be provided, which can for instance also be made of tilting design. Different types of drive means may be provided. The mold parts 22, 23 can be moved and be held closed in a different manner, while also multiple molds and/or stack molds can be built up in a comparable manner. It will further be clear that the first and second directions of movement can also include other angles than the angle of approximately 90° shown, and further the directions of movement may be different for different slides. The movements of the wedges and slides can have any desired orientation, as long as the first and a second direction of movement mutually include an angle. Also, products of a different kind may be manufactured with a mold, at least assembly, according to the invention, for instance relatively small and/or low products, tubular products and the like. Different types of holders can be manufactured according to the invention. Wave patterns can also be provided on the outer sides of the walls. If use is made of slides, the wave patterns can be formed wholly or partly with the aid of those slides.

These and many comparable embodiments are understood to fall within the framework of the invention as outlined by the claims.

## Claims

1. A plastic injection molded product with at least one wall (3, 4, 5) with a height direction and a width direction, which wall (3, 4, 5) over at least a portion of the height direction, on at least one side, has a wavy course in the longitudinal direction, such that the thickness of the wall (3, 4, 5) in at least one direction is alternately larger and smaller with a flowing course, wherein the product is provided with at least two sidewalls (3) and two end walls (4) which extend along the sides of substantially the rectangular bottom (2), **characterised in that** at least two of the walls (3, 4, 5) have at least a middle portion having a cross section with the flowing course.

2. A plastic injection molded product according to claim 1, wherein said at least one wall (3, 4, 5) on one side is substantially flat and on the opposite side in one direction has a wavy pattern, such that the thickness of the wall in said direction alternately increases and decreases.

3. A plastic injection molded product according to claim 1 or 2, wherein said at least one wall (3, 4, 5) has a sinusoidal course in the wall thickness in said direction.

4. A plastic injection molded product according to any one of the preceding claims, wherein the at least two side walls (3, 4) extend approximately at right angles to the bottom (2).

5. A plastic injection molded product according to any one of the preceding claims, with a bottom (2) and at least one wall (3, 4, 5) extending from that bottom, wherein the at least one wall (3, 4, 5), in a direction approximately parallel to the bottom over at least a portion of the wall, has a cross section which is such that the wall thickness in that direction has a flowing course between alternately a first, smaller thickness (d1) and a second, larger thickness (d2).

6. A plastic injection molded product according to any one of the preceding claims, wherein at least one cross wall (10) is provided which extends from a wave crest or wave trough of said at least one wall.

7. A plastic injection molded product according to any one of the preceding claims, wherein at least one wall (3, 4, 5) on one side has a substantially flat portion and on the opposite side, at least opposite said substantially flat portion, has a wavy pattern in one direction, such that the thickness of the respective wall part alternately increases and decreases in said direction, while on said substantially flat part at least one label is provided.

8. A plastic injection molded product according to claim 7, wherein said at least one label has been provided by in-mold labeling.

9. A plastic injection molded product according to any one of the preceding claims, wherein said at least one wall (3, 4, 5) comprises at least two wave crests with on opposite sides of each wave crest a wave trough, while the maximum wall thickness of the respective wall part lies at said wave crests and the minimum thickness lies at at least one wave trough.

10. A plastic injection molded product according to any one of the preceding claims, wherein the ratio between the maximum and the minimum thickness of said at least one wall (3, 4, 5) is between 10:10.1 and 10:80, in particular between 10:10.5 and 10:60, more particularly between 10:11 and 10:50.

11. A plastic injection molded product according to any one of the preceding claims, wherein at least one cross wall (10) is provided which includes an angle with said wall between approximately 20 and 160°, while the thickness of the or each cross wall is smaller than or equal to approximately the maximum thickness of said at least one wall.

12. A plastic injection molded product according to any one of the preceding claims, wherein at least one cross wall (10) is provided, which includes an angle with said wall between approximately 20 and 160°, wherein the thickness of the or each cross wall is preferably greater than or equal to approximately the minimum thickness of said at least one wall.

13. A plastic injection molded product according to any one of the preceding claims, wherein at least partly double-walled walls (3, 4, 5) are provided and at least mutually facing surfaces of wall parts of those walls are wavy.

14. A method for manufacturing a plastic product according to any one of the preceding claims, wherein at least one wall (3, 4, 5) of the product (1) is formed in a mold cavity (32) by injection molding, wherein a portion of the mold cavity (32) which forms said at least one wall has at least one movable mold wall part (33; 51, 52, 53) which is movable between a retracted position and a forwardly moved position, wherein, with the movable mold wall part (33; 51, 52, 53) in the retracted position, plastic is introduced into the respective part of the mold cavity and then said movable mold wall part is brought to the forwardly moved position, such that the plastic in said part of the mold cavity is spread, said movable mold wall part (33) and/or an opposite mold wall part being formed such that on at least one side of the wall to be formed a wavy surface is obtained, such that the wall thickness of the respective wall in one direction has a flowing course between alternately thick and thin parts.

## Patentansprüche

1. Mittels Spritzguss hergestelltes Kunststoffprodukt mit zumindest einer Wand (3, 4, 5) mit einer Höhenerstreckung und einer Breitenerstreckung, welche Wand (3, 4, 5) über zumindest einen Abschnitt der Höhenerstreckung auf zumindest einer Seite einen wellenförmigen Verlauf in der Längsrichtung derart hat, dass die Dicke der Wand (3, 4, 5) in zumindest einer Richtung abwechselnd größer und kleiner bei einem fließenden Verlauf ist, wobei das Produkt mit zumindest zwei Seitenwänden (3) und zwei Stirnwänden (4) ausgestattet ist, welche längs der Seiten eines im wesentlichen rechtwinkligen Bodens (2) aufragen,
**dadurch gekennzeichnet,**
**dass** zumindest zwei der Wände (3, 4, 5) mindestens einen Mittelabschnitt besitzen, der einen Querschnitt mit einem fließenden Verlauf besitzt.

2. Mittels Spritzguss hergestelltes Kunststoffprodukt nach Anspruch 1,
in welchem die zumindest eine Wand (3, 4, 5) auf einer Seite im Wesentlichen flach ist und auf der gegenüberliegenden Seite in einer Richtung ein wellenförmiges Muster derart besitzt, dass die Dicke der Wand in dieser Richtung abwechselnd zunimmt und abnimmt.

3. Mittels Spritzguss hergestelltes Kunststoffprodukt nach Anspruch 1 oder 2,
in welchem die zumindest eine Wand (3, 4, 5) in dieser Richtung in der Wanddicke einen sinusförmigen Verlauf besitzt.

4. Mittels Spritzguss hergestelltes Kunststoffprodukt nach einem der vorstehenden Ansprüche,
in welchem die zumindest zwei Seitenwände (3, 4) näherungsweise in rechten Winkeln zum Boden (2) aufragen.

5. Mittels Spritzguss hergestelltes Kunststoffprodukt nach einem der vorstehenden Ansprüche, mit einem Boden (2) und zumindest einer von diesem Boden aufragenden Wand (3, 4, 5),
in welchem die zumindest eine Wand (3, 4, 5) in einer Richtung näherungsweise parallel zum Boden über zumindest einen Abschnitt der Wand einen Querschnitt besitzt, weicher derart ist, dass die Wanddicke in dieser Richtung einen fließenden Verlauf zwischen abwechselnd einer ersten kleineren Dicke (d1) und einer zweiten größeren Dicke (d2) besitzt.

6. Mittels Spritzguss hergestelltes Kunststoffprodukt nach einem der vorstehenden Ansprüche,
in welchem zumindest eine Querwand (10) vorgesehen ist, welche sich von einem Wellenberg oder einem Wellental der wenigstens einen Wand aus erstreckt.

7. Mittels Spritzguss hergestelltes Kunststoffprodukt nach einem der vorstehenden Ansprüche,
in welchem zumindest eine Wand (3, 4, 5) auf einer Seite einen im Wesentlichen flachen Abschnitt besitzt und auf der gegenüberliegenden Seite zumindest gegenüber dem im Wesentlichen flachen Abschnitt ein wellenförmiges Muster in einer Richtung derart besitzt, dass die Dicke des entsprechenden Wandteils abwechseind in dieser Richtung zunimmt und abnimmt, während auf dem im Wesentlichen flachen Teil zumindest ein Etikett vorgesehen ist.

8. Mittels Spritzguss hergestelltes Kunststoffprodukt nach Anspruch 7,
in welchem das zumindest eine Etikett mittels eines Etikettierens in der Form bereitgestellt worden ist.

9. Mittels Spritzguss hergestelltes Kunststoffprodukt nach einem der vorstehenden Ansprüche,
in welchem die zumindest eine Wand (3, 4, 5) zumindest zwei Wellenberge aufweist, mit auf gegenüberliegenden Seiten eines jeden Wellenbergs einem Wellental, während die maximale Wanddicke des entsprechenden Wandteils bei den Wellenbergen liegt und die minimale Dicke bei zumindest einem Wellental liegt.

10. Mittels Spritzguss hergestelltes Kunststoffprodukt nach einem der vorstehenden Ansprüche,
in welchem das Verhältnis zwischen der maximalen und der minimalen Dicke
von der zumindest einen Wand (3, 4, 5) zwischen 10 zu 10,1 und 10 zu 80 beträgt, insbesondere zwischen 10 zu 10,5 und 10 zu 60, ganz besonders zwischen 10 zu 11 und 10 zu 50.

11. Mittels Spritzguss hergestelltes Kunststoffprodukt nach einem der vorstehenden Ansprüche,
in welchem zumindest eine Querwand (10) vorgesehen ist,
welche einen Winkel mit der Wand zwischen näherungsweise 20° und 160° einschließt, wobei die Dicke von der oder jeder Querwand kleiner ist als oder gleich ist zu näherungsweise der maximalen Dicke von der zumindest einen Wand.

12. Mittels Spritzguss hergestelltes Kunststoffprodukt nach einem der vorstehenden Ansprüche,
in welchem zumindest eine Querwand (10) vorgesehen ist, welche einen Winkel mit der Wand zwischen näherungsweise 20° und 160° einschließt, wobei die Dicke von der oder jeder Querwand vorzugsweise größer ist als oder gleich ist zu näherungsweise der minimalen Dicke von der zumindest einen Wand.

13. Mittels Spritzguss hergestelltes Kunststoffprodukt nach einem der vorstehenden Ansprüche,
in welchem zumindest teilweise doppelwandige Wände (3, 4, 5) vorgesehen sind und zumindest einander gegenüberliegende Oberflächen von den Wandteilen von diesen Wänden wellig sind.

14. Verfahren zum Herstellen eines Kunststoffprodukts nach einem der vorstehenden Ansprüche,
in welchem zumindest eine Wand (3, 4, 5) des Produkts (1) in einer Formausnehmung (32) mittels Spritzgießen ausgebildet wird, wobei ein Abschnitt der Formausnehmung (32), welcher die zumindest eine Wand ausformt, zumindest einen beweglichen Formwandteil (33; 51, 52, 53) besitzt, welcher zwischen einer zurückgezogenen Position und einer nach vorn geschobenen Position beweglich ist, wobei dann, wenn der bewegliche Formwandteil (33, 51, 52, 53) in der zurückgezogenen Position ist, Kunststoff in den entsprechenden Teil der Formausnehmung eingespritzt wird und darren das bewegliche Formwandteil derart in die nach vorne geschobene Position gebracht wird, dass der Kunststoff in diesem Teil der Formausnehmung verteilt wird, wobei der bewegliche Formwandteil (33) und/oder ein gegenüberliegender Formwandteil so ausgebildet wird, dass auf zumindest einer Seite der Wand, die ausgebildet werden soll, eine wellige Oberfläche erhalten wird, derart, dass die Wanddicke der entsprechenden Wand in einer Richtung einen fließenden Verlauf zwischen abwechselnd dicken und dünnen Teilen besitzt.

## Revendications

1. Produit en plastique moulé par injection avec au moins une paroi (3, 4, 5) ayant une direction en hauteur et une direction en largeur, laquelle paroi (3, 4, 5), sur au moins une partie de la direction en hauteur, au moins d'un côté, a un contour ondulé dans la direction longitudinale, de sorte que l'épaisseur de la paroi (3, 4, 5) dans au moins une direction soit en alternance plus grande et plus petite avec un parcours d'écoulement, dans lequel le produit est pourvu d'au moins deux parois latérales (3) et de deux parois d'extrémité (4) qui s'étendent le long des côtés du fond (2) sensiblement rectangulaire, **caractérisé en ce qu'**au moins deux des parois (3, 4, 5) ont au moins une partie médiane ayant une section transversale avec le parcours d'écoulement.

2. Produit en plastique moulé par injection selon la revendication 1, dans lequel ladite au moins une paroi (3, 4, 5) sur un côté est sensiblement plate et a, sur le côté opposé dans une direction, un motif ondulé, de sorte que l'épaisseur de la paroi dans ladite direction augmente et diminue en alternance.

3. Produit en plastique moulé par injection selon la revendication 1 ou 2, dans lequel ladite au moins une paroi (3, 4, 5) a un parcours sinusoïdal dans l'épaisseur de la paroi dans ladite direction.

4. Produit en plastique moulé par injection selon l'une quelconque des revendications précédentes, dans lequel les au moins deux parois latérales (3, 4) s'étendent à peu près à angles droits avec le fond (2).

5. Produit en plastique moulé par injection selon l'une quelconque des revendications précédentes, avec un fond (2) et au moins une paroi (3, 4, 5) s'étendant depuis cette partie inférieure, dans lequel la au moins une paroi (3, 4, 5) a, dans une direction à peu près parallèle au fond sur au moins une partie de la paroi, une section transversale qui est telle que l'épaisseur de la paroi dans cette direction ait un parcours d'écoulement entre un première épaisseur plus petite (d1) et une seconde épaisseur plus grande (d2) en alternance.

6. Produit en plastique moulé par injection selon l'une quelconque des revendications précédentes, dans lequel il est prévu au moins une paroi transversale (10) qui s'étend d'un pic d'ondulation ou d'un creux d'ondulation de ladite au moins une paroi.

7. Produit en plastique moulé par injection selon l'une quelconque des revendications précédentes, dans lequel au moins une paroi (3, 4, 5) a d'un côté une partie sensiblement plate et, du côté opposé, au moins en regard de ladite partie sensiblement plate, un motif ondulé dans une direction, de sorte que l'épaisseur de la partie de paroi respective augmente et diminue en alternance dans ladite direction, tandis qu'il est appliqué sur la partie sensiblement plate au moins une étiquette.

8. Produit en plastique moulé par injection selon la revendication 7, dans lequel ladite au moins une étiquette a été appliquée par étiquetage dans le moule.

9. Produit en plastique moulé par injection selon l'une quelconque des revendications précédentes, dans lequel ladite au moins une paroi (3, 4, 5) comprend au moins deux pics d'ondulation avec, sur les côtés opposés de chaque pic d'ondulation, un creux d'ondulation, tandis que l'épaisseur de paroi maximale de la partie de paroi respective se situe sur lesdits pics d'ondulation et l'épaisseur minimale sur au moins un creux d'ondulation.

10. Produit en plastique moulé par injection selon l'une quelconque des revendications précédentes, dans lequel le rapport entre l'épaisseur maximale et l'épaisseur minimale de ladite au moins une paroi (3, 4, 5) est compris entre 10:10,1 et 10:80, en particulier entre 10:10,5 et 10:60, plus particulièrement entre 10:11 et 10:50.

11. Produit en plastique moulé par injection selon l'une quelconque des revendications précédentes, dans lequel il est prévu au moins une paroi transversale (10) qui fait un angle avec ladite paroi entre environ 20 et 160 °, tandis que l'épaisseur de la paroi transversale ou de chaque paroi transversale est inférieure ou égale à environ l'épaisseur maximale de ladite au moins une paroi.

12. Produit en plastique moulé par injection selon l'une quelconque des revendications précédentes, dans lequel il est prévu au moins une paroi transversale (10), qui fait un angle avec ladite paroi entre environ 20 et 160 °, dans lequel l'épaisseur de la paroi transversale ou de chaque paroi transversale est de préférence supérieure ou égale à environ l'épaisseur minimale de ladite au moins une paroi.

13. Produit en plastique moulé par injection selon l'une quelconque des revendications précédentes, dans lequel il est prévu des parois au moins en partie doubles (3, 4, 5) et les surfaces au moins mutuellement en regard de parties de ces parois sont ondulées.

14. Procédé pour fabriquer un produit en plastique selon l'une quelconque des revendications précédentes, dans lequel au moins une paroi (3, 4, 5) du produit (1) est formée dans une cavité de moule (32) par moulage par injection, dans lequel une partie de la cavité de moule (32), qui forme ladite au moins une paroi a au moins une partie de paroi de moule mobile (33 ; 51, 52, 53) qui est mobile entre une position rétractée et une position déplacée vers l'avant, dans lequel, avec la partie de paroi de moule mobile (33 ; 51, 52, 53) en position rétractée, du plastique est introduit dans la partie respective de la cavité de moule et, ensuite, ladite partie de paroi de moule mobile est amenée dans la position déplacée vers l'avant, de sorte que le plastique dans ladite partie de la cavité de moule soit étalé, ladite partie de paroi de moule mobile (33) et/ou une partie de paroi de moule mobile opposée étant formée(s) de sorte que, sur au moins un côté de la paroi à former, on obtienne une surface ondulée, de sorte que l'épaisseur de la paroi respective dans une direction ait un parcours d'écoulement entre des parties en alternance épaisses et minces.
